# EUROPÄISCHE PATENTSCHRIFT

(11) **EP 2 954 257 B1**
(45) Veröffentlichungstag und Bekanntmachung des Hinweises auf die Patenterteilung: **11.11.2020**
(21) Anmeldenummer: 14706269.9
(22) Anmeldetag: 21.01.2014
(51) Int. Cl.: F21S 41/16, F21S 41/176, F21S 41/143, F21S 41/151, F21S 41/25, F21S 41/20, F21S 41/675, F21Y 101/00, F21Y 115/30

(54) **SCHEINWERFER FÜR EIN KRAFTFAHRZEUG UND VERFAHREN ZUM ERZEUGEN EINER LICHTVERTEILUNG**
HEADLIGHT FOR A MOTOR VEHICLE AND METHOD FOR DISTRIBUTING LIGHT
PROJECTEUR POUR UN VÉHICULE À MOTEUR ET PROCEDE DE DIFFUSION DE LUMIÈRE

(30) Priorität: 07.02.2013 AT 992013; 30.09.2013 AT 506302013
(43) Veröffentlichungstag der Anmeldung: 16.12.2015
(73) Patentinhaber: ZKW Group GmbH, 3250 Wieselburg (AT)
(72) Erfinder: REINPRECHT, Markus, 3384 Pielachhäuser (AT); BAUER, Friedrich, A-3252 Bergland (AT); REISINGER, Bettina, A-3300 Amstetten (AT)
(74) Vertreter: Patentanwaltskanzlei Matschnig & Forsthuber OG
(86) Internationale Anmeldenummer: PCT/AT2014/050021
(87) Internationale Veröffentlichungsnummer: WO 2014/121315

(56) Entgegenhaltungen:
- EP-A2- 2 537 708
- EP-A2- 2 541 129
- DE-A1-102010 028 949
- US-A1- 2009 015 388
- US-A1- 2009 046 474
- US-A1- 2011 249 460

## Beschreibung

Die Erfindung bezieht sich auf ein Verfahren zum Erzeugen einer vorgegebenen Lichtverteilung mit Hilfe eines KFZ-Scheinwerfers auf einer Fahrbahn, bei welchem zumindest ein modulierter Laserstrahl über zumindest ein Strahlablenkmittel auf ein Lichtkonversionsmittel gelenkt und das an dem Lichtkonversionsmittel erzeugte Leuchtbild auf die Fahrbahn projiziert wird.

Ebenso bezieht sich die Erfindung auf einen Scheinwerfer für Kraftfahrzeuge mit zumindest einer modulierbaren Laserlichtquelle, deren Laserstrahl über ein von einer Strahlablenksteuerung angesteuertes Strahlablenkmittel auf ein Lichtkonversionsmittel gelenkt wird, und mit einem Projektionssystem zur Projektion des an der Leuchtstoffschicht erzeugten Leuchtbildes auf die Fahrbahn.

Der Einsatz von Laserlichtquellen in Kraftfahrzeugen gewinnt derzeit an Bedeutung, da Laserdioden flexiblere und effizientere Lösungen ermöglichen, wodurch auch die Leuchtdichte des Lichtbündels sowie die Lichtausbeute erheblich gesteigert werden kann.

Bei den bekannten Lösungen wird allerdings kein direkter Laserstrahl emittiert, um eine Gefährdung der Augen von Menschen und anderen Lebewesen durch den extrem gebündelten Lichtstrahl hoher Leistung zu vermeiden. Der Laserstrahl wird vielmehr auf einen zwischengeschalteten Konverter, der ein Lumineszenzkonversionsmaterial, kurz "Phosphor" genannt, enthält, von z.B. blauem Licht in vorzugsweise "weißes" Licht umgewandelt.

Aus der EP 2 063 170 A2 ist ein Scheinwerfer für Kraftfahrzeuge der eingangs genannten Artbekannt geworden, bei welchem zur Ausleuchtung der Fahrbahn mit einem blendfreien adaptiven Fernlicht bestimmte Bereiche in Abhängigkeit von anderen Verkehrsteilnehmern ausgespart werden können. Der Strahl eines Lasers wird über einen in zumindest zwei Raumrichtungen bewegbaren Mikrospiegel auf eine Leuchtfläche gelenkt, die zur Konvertierung des Laserlichtes in vorzugsweise weißes Lichteinen Phosphor enthält. Mittels einer Linse wird das Leuchtbild der Leuchtfläche auf die Fahrbahn projiziert. Da der Mikrospiegel einen konzentrischen Laserstrahl ablenken muss, ist er einer entsprechend hohen spezifischen Flächenbelastung ausgesetzt, wodurch seine Konstruktion teurer wird.

Die DE 10 2008 022 795 A1 offenbart einen KFZ-Scheinwerfer, bei welchem die Strahlen dreier Halbleiterlaser der Farben Rot, Grün, Blau durch eine achromatische Linse zu einem weißen Strahl vereinigt werden, der auf eine um zwei Achsen schwingenden Spiegel trifft. Eine Steuervorrichtung moduliert die Strahlleistung derart, dass vorgegebene Bereiche des Spiegels mit vorgegebener Leistung angestrahlt werden. Der Spiegel kann bei einer Ausführungsform eine Beschichtung mit einem Konvertermaterial aufweisen. Bei einer anderen Ausführung ist ein angesteuertes Mikrospiegelarray vorgesehen. Ein Laserstrahl trifft dabei auf einen Diffusor, der zugleich lichtkonvertierend ausgeführt ist, und welcher das Mikrospiegelarray ausleuchtet. Über eine Projektionsoptik kann das durch das Spiegelarray erzeugte gewünschte Bild auf die Fahrbahn projiziert werden.

Ganz allgemein besteht der Wunsch nach mehr Funktionalitäten für adaptive Scheinwerfersysteme (AFS = Adaptive Frontlighting Systems) mit hoher Auflösung und kurzen Reaktionszeiten. Die bekannten Vorrichtungen sind jedoch entweder in ihrer Komplexität sehr hoch oder zeigen Auflösungsprobleme in zumindest einer, meist in horizontaler Richtung. Dies gilt auch für Scheinwerfer, die zur Ausleuchtung eine LED-Matrix verwenden, wobei wahlweise Segmente der Matrix ein- oder ausgeschaltet werden können. Hier liegt die Auflösung in günstigen Fällen bei 1,5°. Weiters treten auch bei mit Laserlichtquellen erzeugten Leuchtbildern oft an den Rändern unerwünschte Farbeffekte auf.

Ein gattungsgemäßes Verfahren zum Erzeugen einer vorgegebenen Lichtverteilung und ein gattungsgemäßer Scheinwerfer für Fahrzeuge sind aus US2011249460 A1 bekannt.

Eine Aufgabe der Erfindung besteht in der Schaffung eines Verfahrens bzw. eines Scheinwerfers der gegenständlichen Art, der ohne hochkomplexen Aufbau eine verbesserte Auflösung in horizontale Richtung aufweist, den oben genannten Anforderungen an AFS-Funktionen entgegenkommt und bei Minimierung unerwünschter Farbeffekte eine hohe Dynamik der Lichtstärke innerhalb des Leuchtbildes gewährleistet.

Diese Aufgabe wird mit einem Verfahren der eingangs genannten Art gelöst, bei welchem erfindungsgemäß die Laserstrahlen einer weiteren, zweiten Gruppe von zumindest zwei Laserlichtquellen über das Strahlablenkmittel zur Erzeugung einer zweiten Gruppe von zumindest zwei übereinanderliegenden, im Wesentlichen horizontalen Lichtbändern auf das zumindest eine Lichtkonversionsmittel gelenkt werden, wobei Lichtbänder der ersten Gruppe und Lichtbänder der zumindest zweiten Gruppe einander auf dem Lichtkonversionsmittel überlappen.

In der Praxis hat es sich als zweckmäßig erwiesen, wenn die Überlappung zwischen 10 und 90 % der Höhe der Lichtbänder, vorzugsweise 50%, beträgt.

Vorteilhaft hinsichtlich der Einstellmöglichkeit ist es, wenn der Abstand der Lichtbänder voneinander und dadurch das Ausmaß der Überlappung durch den Einfallswinkel der Laserstrahlen auf das Strahlablenkmittel festgelegt wird.

Bei einer zweckmäßigen Variante ist vorgesehen, dass das Strahlablenkmittel zumindest einen, um eine Achse verschwenkbaren Mikrospiegel aufweist, da solche Mikrospiegel dem Konstrukteur in bewährten Ausführungen zur Verfügung stehen. Zur Vereinfachung der Einstellung kann vorgesehen sein, dass die Länge der Lichtbänder über die Schwingungsamplitude des Mikrospiegels eingestellt wird.

Eine freie Auswahl der Spotgeometrie wird möglich, wenn durch Strahlformungsoptiken und/oder die Wahl des Abstands des Lichtkonversionsmittels von den Brennpunkten dieser Optiken Form und Größe der an dem Lichtkonversionsmittel erzeugten Spots bestimmt werden.

Dabei ist es besonders vorteilhaft, wenn Spots ellipsenartiger Gestalt mit vertikaler großer Achse erzeugt werden.

Zur Lösung der gestellten Aufgabe kann weiters ein Scheinwerfer der angegebenen Art herangezogen werden, bei welchem erfindungsgemäß eine zweite Gruppe von zumindest zwei Laserlichtquellen zur Erzeugung einer zweiten Gruppe von zumindest zwei übereinanderliegenden, im Wesentlichen horizontalen Lichtbändern auf das Lichtkonversionsmittel vorgesehen ist, wobei den Laserlichtquellen eine Laseransteuerung zugeordnet ist und die Laserstrahlen über das Strahlablenkmittel so auf das zumindest eine Lichtkonversionsmittel gelenkt sind, dass Lichtbänder der ersten Gruppe und Lichtbänder der zweiten Gruppe einander auf dem Lichtkonversionsmittel überlappen.

Es ist vorteilhaft, wenn die Überlappung der Lichtbänder zwischen 10 und 90 % der Höhe der Lichtbänder, vorzugsweise 50%, beträgt.

Auch ist es zweckmäßig, wenn der Abstand der Lichtbänder voneinander und dadurch das Ausmaß der Überlappung durch den Einfallswinkel der Laserstrahlen auf das Strahlablenkmittel festgelegt ist.

Ein angenehmes und den Anforderungen entsprechendes Leuchtbild erhält man, wenn die von den Laserlichtquellen der ersten Gruppe erzeugten Lichtbänder ebenso wie die von den Laserlichtquellen der zweiten Gruppe erzeugten Lichtbänder unmittelbar, ohne Abstand aneinander anschließen.

Eine praxistaugliche Ausführung ergibt sich, wenn das Strahlablenkmittel zumindest einen, um eine Achse verschwenkbaren Mikrospiegel aufweist.

Dabei hat es sich als sehr zweckmäßig erwiesen, wenn der Mikrospiegel über die Strahlablenksteuerung mit seiner mechanischen Eigenfrequenz angesteuert wird. Nicht zuletzt wegen der Aufteilung der abzuführenden Verlustwärme ist es sinnvoll, wenn jeder Gruppe von Laserlichtquellen ein Mikrospiegel zugeordnet ist.

Es ist auch vorteilhaft, wenn die Verschwenkamplitude der Mikrospiegel über die Strahlablenksteuerung änderbar ist.

Im Sinne einer vielfältigen Einstellbarkeit der Spots ist es ratsam, wenn jeder Laserlichtquelle eine Kollimatoroptik nachgeordnet ist.

Weiters ergeben sich besonders praxistaugliche Ausführungen, wenn zwischen jeder Gruppe von Laserlichtquellen und dem Strahlablenkmittel eine Sammellinse mit einer nachfolgenden Zerstreuungslinse angeordnet ist.

In Hinblick auf Baugröße und Leistungsfähigkeit ist es zweckmäßig, wenn die Laserlichtquellen Laserdioden sind.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 die für die Erfindung wesentlichen Komponenten eines Scheinwerfers und deren Zusammenhang in einer schematischen Darstellung,
Fig. 2a die von einer ersten Gruppe von Laserlichtquellen auf einer Leuchtfläche erzeugten Spots bzw. Lichtbänder,
Fig. 2b die von einer zweiten Gruppe von Laserlichtquellen auf einer Leuchtfläche erzeugten Spots bzw. Lichtbänder,
Fig.2c die von einer ersten Gruppe und von einer zweiten Gruppe von Laserlichtquellen gemeinsam auf einer Leuchtfläche erzeugten, einander überlappenden Lichtbänder und den Intensitätsverlauf,
Fig. 3 in einer in der KFZ-Technik üblichen Darstellung ein Gesamtleuchtbild, nämlich ein zentrales Fernlichtbild, bei dem ein markierter Bereich auszublenden ist und
Fig. 4 in einer Darstellung analog zu Fig. 2 einen ausgeblendeten Bereich in einem Lichtband sowie die Intensität bzw. das Ein/Ausschaltdiagramm der betroffenen Laserlichtquellen.

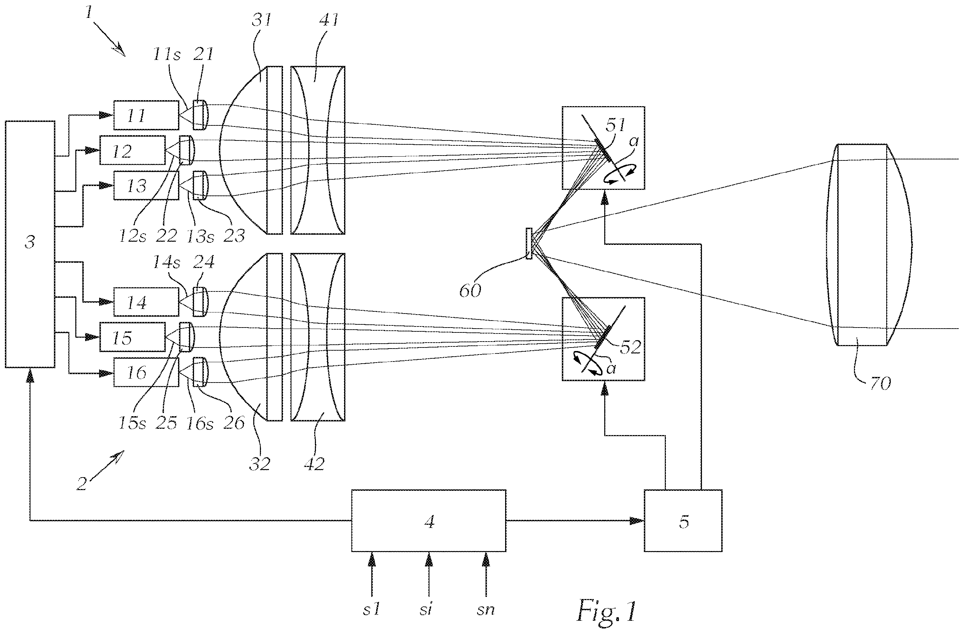

Unter Bezugnahme auf Fig. 1 wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers sind zwei, hier übereinander liegende Gruppen 1 und 2 von je drei Laserlichtquellen 11, 12, 13 bzw. 14, 15, 16, welche je einen mit 11s bis 16s bezeichneten Laserstrahl abgeben können. Den Laserlichtquellen11 bis 16 ist eine Laseransteuerung 3 zugeordnet, wobei diese Ansteuerung 3 zur Stromversorgung dient und auch zum Modulieren der Strahlintensität der einzelnen Laser eingerichtet ist. Unter "Modulieren" wird in Zusammenhang mit der vorliegenden Erfindung verstanden, dass die Intensität einer Laserlichtquelle geändert werden kann, sei es kontinuierlich oder, im Sinne eine Ein- und Ausschaltens, gepulst. Wesentlich ist, dass die Lichtleistung analog dynamisch geändert werden kann, je nachdem, an welche Stelle die Strahlen gelenkt werden. Zusätzlich gibt es noch die Möglichkeit des Ein- und Ausschaltens für eine gewisse Zeit, um definierte Stellen nicht zu beleuchten

Die Laseransteuerung 3 enthält ihrerseits wiederum Signale von einer zentralen Scheinwerferansteuerung 4, welcher Sensorsignale s1 ... si ... sn zugeführt werden können. Diese Steuer- und Sensorsignale können einerseits beispielsweise Schaltbefehle zum Umschalten von Fernlicht auf Abblendlicht sein oder andererseits Signale, die von Lichtsensoren oder Kameras aufgenommen werden, welche die Beleuchtungsverhältnisse auf der Fahrbahn erfassen und beispielsweise bestimmte Bereiche im Leuchtbild ausblenden oder abschwächen sollen. Die Laserlichtquellen 11 bis 16, die bevorzugt als Laserdioden ausgebildet sind, geben beispielsweise blaues oder UV-Licht ab.

Jeder Laserlichtquelle 11 bis 16 ist eine eigene Kollimatoroptik 21 bis 26 nachgeordnet, welche den zunächst stark divergenten Laserstrahl 11s bis 16s bündelt. Anschließend wird der Abstand der Laserstrahlen der ersten Gruppe 1 bzw. der zweiten Gruppe 2 je durch eine gemeinsame Sammellinse 31 bzw. 32 verringert und mit nachfolgenden Zerstreuungslinsen 41 bzw. 42 wird der Austrittswinkel der Laserstrahlen so gering wie möglich gehalten.

Die drei in der beschriebenen Weise "gebündelten" Laserstrahlen 11s, 12s, 13s der ersten Gruppe 1 treffen auf einen ersten Mikrospiegel 51 und analog treffen die Laserstrahlen 14s, 15s, 16s der zweiten Gruppe 2 auf einen zweiten Mikrospiegel 52 auf und werden gemeinsam auf ein im vorliegenden Fall als Leuchtfläche ausgebildetes Lichtkonversionsmittel 60 reflektiert, welche in bekannter Weise einen Phosphor zur Lichtkonversion aufweist. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen auch Optokeramiken in Frage, das sind transparente Keramiken, wie beispielsweise YAG-Ce (ein Yttrium-Aluminium-Granat mit Cer dotiert).

Der um lediglich eine einzige Achse a schwingende Mikrospiegel 60 wird von einer Spiegelansteuerung 5 angesteuert und in Schwingungen konstanter Frequenz versetzt, wobei diese Schwingungen insbesondere der mechanischen Eigenfrequenz des Mikrospiegels entsprechen können. Auch die Spiegelansteuerung 5wird ihrerseits von der Scheinwerferansteuerung 4 gesteuert, um die Schwingungsamplitude der Mikrospiegel 51, 52 einstellen zu können, wobei auch asymmetrisches Schwingen um die Achse einstellbar sein kann. Die Ansteuerung von Mikrospiegeln ist bekannt und kann auf vielerlei Art erfolgen, z.B. elektrostatisch oder elektrodynamisch. Bei erprobten Ausführungsformen der Erfindung schwingen die Mikrospiegel 51, 52 beispielsweise mit einer Frequenz von einigen hundert Hz und ihr maximaler Ausschlag beträgt in Abhängigkeit von ihrer Ansteuerung einige wenige Grad bis 60°. Die Position der Mikrospiegel 51, 52 wird zweckmäßigerweise an die Spiegelansteuerung 5 und/oder an die Scheinwerferansteuerung 4 rückgemeldet. Die beiden Mikrospiegel können synchron schwingen, es ist aber auch ein nicht synchrones Schwingen anwendbar, beispielsweise um die thermische Belastung der Leuchtfläche bzw. des Lichtkonversionsmittels gleichmäßiger zu gestalten.

Wenngleich das bevorzugte Ausführungsbeispiel Mikrospiegel zeigt, die nur um eine Achse schwingen, ist es auch möglich, Mikrospiegel zu verwenden, die um zwei Achsen schwingen. In diesem Fall können mehrere Laserstrahlen auf einen solchen Mikrospiegel gerichtet sein, welcher dann überlappende oder direkt aneinander anliegende Lichtbänder erzeugt. Auch sind Ausführungen mit lediglich einem einzigen Mikrospiegel denkbar, bei welchen beispielsweise die Laserstrahlen entgegen der Hauptabstrahlrichtung des Scheinwerfers direkt auf den Mikrospiegel auftreffen, der dann die Laserstrahlen auf einen durchleuchteten Phosphor lenkt. Die Aufteilung auf zwei Gruppen von Laserlichtquellen und die Verwendung von zwei Mikrospiegeln bringt allerdings Vorteile hinsichtlich eines kompakten Aufbaus und einer gut beherrschbaren Wärmeabfuhr, zumal die mögliche thermische Belastung eines Mikrospiegels begrenzt ist.

Im Folgenden sei die Funktionsweise des beispielsweisen, nach dem erfindungsgemäßen Verfahrens arbeitenden Scheinwerfers erläutert.

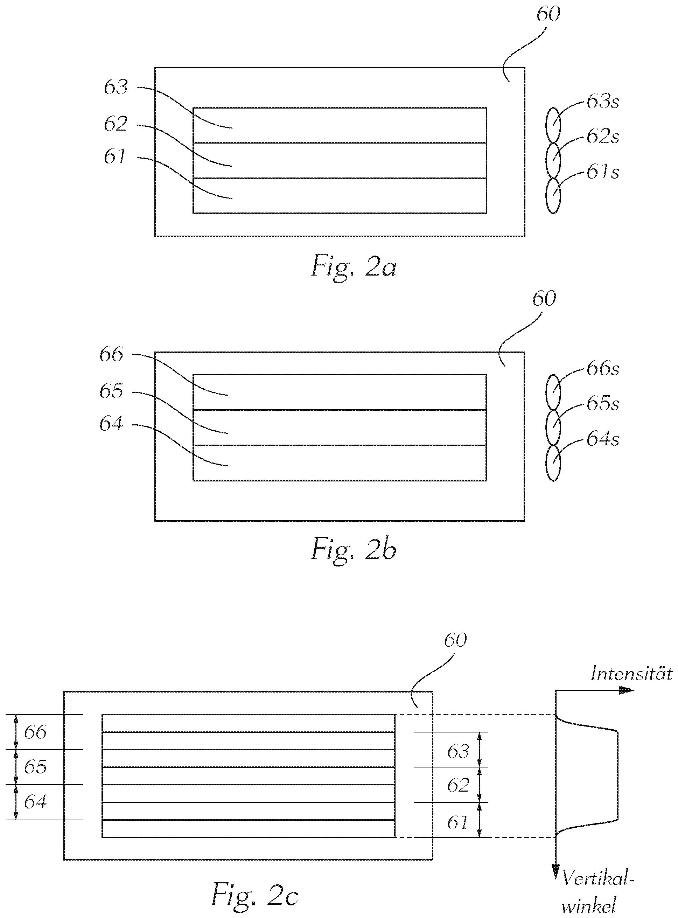

Die gebündelten Laserstrahlen 11s, 12s, 13s der ersten Gruppe 1 von Laserlichtquellen 11, 12, 13 erzeugen auf dem Lichtkonversionsmittel 60, nämlich der Leuchtfläche, die im Allgemeinen eben ist, jedoch nicht eben sein muss, horizontale Lichtbänder 61, 62, 63 (Fig. 2a), wobei der Winkel der Laserlichtquellen 11, 12, 13 bezüglich des Mikrospiegels 51 so eingestellt ist, dass die Lichtbänder auf der Leuchtfläche übereinanderliegen und aneinander angrenzen, wobei der Abstand der Lichtbänder voneinander bevorzugt Null ist. Dies kann durch entsprechendes Justieren der Laserlichtquellen 11, 12, 13oder der nachfolgenden Linsen 21, 22, 23, 31, 41, 32, 42 genau eingestellt werden und auf dem Lichtkonversionsmittel 60, hier der Leuchtfläche, entsteht ein Leuchtbild, das im vorliegenden Fall aus drei Lichtbändern 61, 62, 63 zusammengesetzt ist.

Rechts von der symbolisch dargestellten Leuchtfläche bzw. dem Lichtkonversionsmittel 60 sind schematisch die Spots 61s, 62s, 63s dargestellt, die man bei stillstehendem Spiegel 51 sehen würde und die dem jeweiligen Laserstrahlquerschnitt an dieser Stelle entsprechen. Die Größe der Spots kann insbesondere durch die Lage der Leuchtfläche 60 bezüglich der Optiken 21, 31, 41 festgelegt werden. Je weiter sich der das Lichtkonversionsmittel 60 außerhalb des zugehörigen Brennpunktes befindet, umso größer werden die Spots. Die Form der Spots wird außerdem a priori durch die jeweils verwendeten Laserlichtquellen bestimmt. So ist der Strahlquerschnitt von Halbleiterlasern beispielsweise immer elliptisch mit zum Rand hin nach einer Gauß-verteilung abfallender Intensität, kann jedoch durch entsprechende optische Mittel geändert werden.

Die verwendeten Spotgrößen müssen nicht überall gleich sein. So ist in der Praxis in der Mitte des Gesamtleuchtbildes die höchste Auflösung erwünscht und dementsprechend werden in diesem Bereich bevorzugt Lichtbänder überlagert, die durch kleinere Spotgrößen generiert werden.

In völlig analoger Weise werden die in Fig. 2b gezeigten Lichtbänder 64, 65, 66 bzw. Spots 64s, 65s, 66s erzeugt, doch sieht man, dass die Gesamtheit dieser Lichtbänder um die halbe Breite eines Lichtbandes bezüglich der Gesamtheit der Lichtbänder 61, 62, 63 nach oben versetzt ist.

Die beschriebene Versetzung führt dazu, dass die Lichtbänder der ersten Gruppe und die Lichtbänder der zweiten Gruppe einander überlappen, im vorliegenden, aus Fig. 2c hervorgehenden Fall um etwa 50% ihrer Breite. In Summe entstehen somit sieben Lichtbänder (Fig. 2c), von welchen das obere und das untere eine nach außen auslaufende Intensität zeigen, wobei der Verlauf - typisch für Laserdioden -annähernd einer Gauß-Verteilung folgt.

Man erkennt hier bereits einen Vorteil der Erfindung, nämlich das Fehlen abrupter Intensitätsübergänge im Inneren des Leuchtbildes, wodurch auch das Justieren der einzelnen Laserlichtquellen und Optiken weniger kritisch wird, selbst wenn die Lichtbänder gemäß Fig. 2a und 2b nicht "genau" aneinander liegen.

Es ist auch möglich, dass an den oberen und unteren Rändern des Leuchtbildes, an welchen eine nach außen auslaufende Intensität vorliegt, je ein Lichtband erzeugt wird, welches aus einem Laserspot halber Größe erzeugt wird, um eben diesen Randbereich auszufüllen.

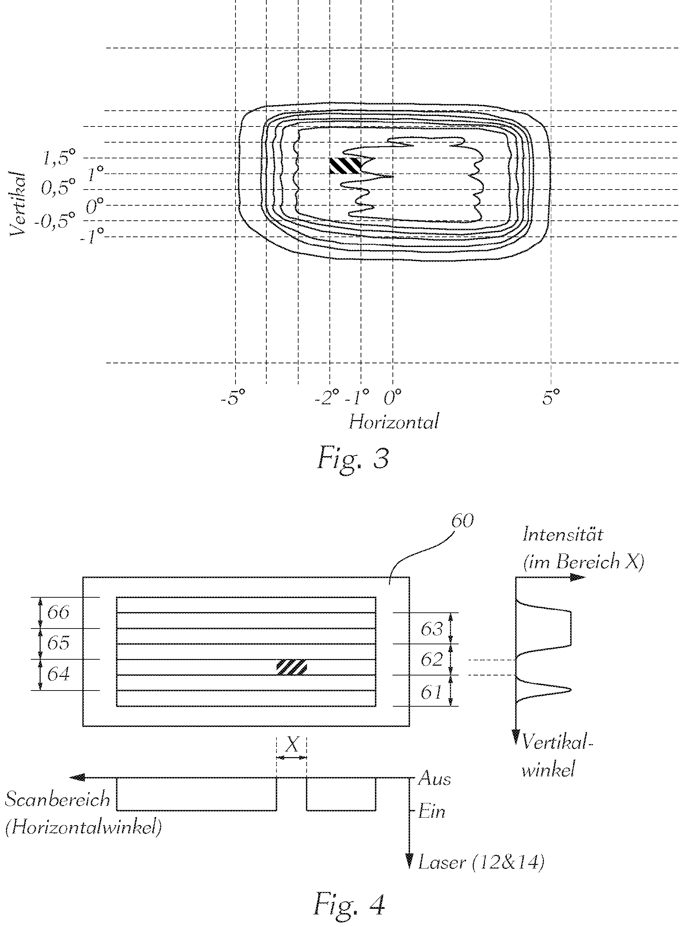

Das gemeinsam erzeugte Leuchtbild wird nun mit einem Projektionssystem 70 als Gesamtleuchtbild (Fig. 4) nach vorne projiziert. Die Verwendung von auf eine Fahrbahn projizierten Lichtbändern ist besonders zweckmäßig, da durch diese Lichtbänder dann beispielsweise ein Fernlicht, eine Hell-Dunkel-Grenze und ein Abblendlicht (Vorfeldlicht) auf einfache Weise generiert werden können.

Es soll auch darauf hingewiesen werden, dass in der Zeichnung alle Lichtbänder gleich "hoch" gezeichnet sind, dies jedoch keineswegs zwingend ist. Beispielsweise können die Lichtbänder für Fernlicht "höher" als jene für Abblendlicht oder für die Hell-Dunkel-Grenze sein, deren Abmessung in Höhenrichtung am geringsten ist. Bei einer Änderung der Höhe einzelner Lichtbänder muss selbstverständlich auch der Winkel der Laser bzw. Laserstrahlen zueinander geändert werden, um wieder den Abstand zwischen den Lichtbändern gleich Null zu machen.

Es soll klar sein, dass der Begriff "horizontal" hier in einer relativen Bedeutung zu verstehen ist, sich auf eine ebene Fahrbahn bzw. auf eine Normallage des Fahrzeugs bezieht und lediglich zur besseren Lesbarkeit verwendet wird, somit nicht einschränkend zu verstehen ist. Das gleiche gilt für den verwendeten Begriff "vertikal". In diesem Sinn ist auch darauf hinzuweisen, dass durch Drehen der Anordnung um 90° prinzipiell auch die Erzeugung von Lichtbändern denkbar ist, die in vertikaler Richtung verlaufen

Es ist auch ersichtlich, dass das Leuchtbild und damit auch die Fahrbahnausleuchtung einerseits durch das Einstellen der Schwingungsamplitude der Mikrospiegels 51 geändert werden kann, wodurch sich die Länge der horizontalen Lichtbänder ändert, und andererseits durch Einstellen der Intensität der einzelnen Laserlichtquellen auch die Intensitätsverteilung innerhalb jedes Lichtbandes geändert werden kann. Dazu ist anzumerken, dass es möglich ist, Laserlichtquellen mit hoher Frequenz, sei es gepulst oder kontinuierlich intensitätsmoduliert, anzusteuern, so dass in Übereinstimmung mit der jeweiligen Position der Mikrospiegel 51, 52 beliebige Lichtverteilungen innerhalb der Lichtbänder nicht nur einstellbar sondern auch rasch änderbar sind, wenn eine besondere Gelände- oder Fahrsituation dies erfordert, beispielsweise wenn entgegenkommende Fahrzeuge oder Fußgänger durch Sensoren erfasst werden und dementsprechend eine sinngemäße Änderung der Geometrie und/oder Intensität der Fahrbahnausleuchtung erwünscht ist.

Dies wird nun näher unter Bezugnahme auf die Fig. 3 und 4 erläutert. Wenn der in Fig. 3 schraffiert dargestellte Bereich, der horizontal zwischen -1° und -2° und vertikal zwischen 1° und 1,5° liegt, ausgeblendet werden soll, werden jene Laserlichtquellen, welche das betroffene Segment bilden, ausgeschaltet oder gedimmt. Da es sich im Beispiel um die Lichtbänder 62 und 64 handelt, werden die Laserlichtquellen 12 und 14 für den zu der Scanlänge X zugehörigen Scan-Zeitraum ausgeschaltet. Die Diagramme unter der Leuchtfläche der Fig. 4 bzw. rechts neben der Leuchtfläche veranschaulichen das Ein/Ausschalten der Laserlichtquellen bzw. den entstehenden Intensitätsverlauf.

Bei dem gezeigten Ausführungsbeispiel findet das Überlappen der Lichtbänder auf einer Leuchtfläche bzw. einem Lichtkonversionsmittel statt und das solchermaßen erzeugte Leuchtbild wird auf die Fahrbahn projiziert. Wenngleich bei dem gezeigten Ausführungsbeispiel zwei Gruppen mit je drei Laserlichtquellen beschrieben sind, sollte es dem Fachmann klar sein, dass auch mehrere Gruppen mit anderer und unterschiedlicher Anzahl von Laserlichtquellen dem jeweiligen Einsatzzweck entsprechend denkbar sind. Weiters ist ein Überlappen der Lichtbänder von 50% keineswegs zwingend, vielmehr sind in der Praxis Überlappungen von 10% bis 90% durchaus möglich.

## Patentansprüche

1. Verfahren zum Erzeugen einer vorgegebenen Lichtverteilung mit Hilfe eines KFZ-Scheinwerfers auf einer Fahrbahn, bei welchem zumindest ein modulierter Laserstrahl über zumindest ein Strahlablenkmittel (51, 52) auf ein Lichtkonversionsmittel (60) gelenkt und das an dem Lichtkonversionsmittel erzeugte Leuchtbild auf die Fahrbahn projiziert wird,
wobei die Laserstrahlen einer ersten Gruppe (1) von zumindest zwei Laserlichtquellen (11, 12, 13) über das Strahlablenkmittel (51, 52) zur Erzeugung einer ersten Gruppe von zumindest zwei übereinanderliegenden, im Wesentlichen horizontalen Lichtbändern (61, 62, 63) auf das Lichtkonversionsmittel (60) gelenkt werden,
**dadurch gekennzeichnet, dass**
die Laserstrahlen einer weiteren, zweiten Gruppe (2) von zumindest zwei Laserlichtquellen (14, 15, 16) über das Strahlablenkmittel (51, 52) zur Erzeugung einer zweiten Gruppe von zumindest zwei übereinanderliegenden, im Wesentlichen horizontalen Lichtbändern (64, 65, 66) auf das Lichtkonversionsmittel (60) gelenkt werden, wobei
Lichtbänder (61, 62, 63) der ersten Gruppe (1) und Lichtbänder (64, 65, 66) der zweiten Gruppe einander auf dem Lichtkonversionsmittel (60) überlappen.

2. Verfahren nach Anspruch 1, **dadurch gekennzeichnet, dass** die Überlappung zwischen 10 und 90 % der Höhe der Lichtbänder, vorzugsweise 50%, beträgt.

3. Verfahren nach Anspruch 1 oder 2, **dadurch gekennzeichnet, dass** der Abstand der Lichtbänder voneinander und dadurch das Ausmaß der Überlappung durch den Einfallswinkel der Laserstrahlen auf das Strahlablenkmittel (51, 52) festgelegt wird.

4. Verfahren nach einem der Ansprüche 1 bis 3, **dadurch gekennzeichnet, dass** das Strahlablenkmittel zumindest einen, um eine Achse (a) verschwenkbaren Mikrospiegel (51, 52) aufweist.

5. Verfahren nach einem der Anspruch 4, **dadurch gekennzeichnet, dass** die Länge der Lichtbänder (61, 62, 63; 64, 65, 66) über die Schwingungsamplitude des Mikrospiegels (51, 52) eingestellt wird.

6. Verfahren nach einem der Ansprüche 1 bis 5, **dadurch gekennzeichnet, dass** durch Strahlformungsoptiken (21 bis 26, 31, 32, 41, 42) und/oder die Wahl des Abstands des Lichtkonversionsmittels (60) von den Brennpunkten dieser Optiken Form und Größe der an dem Lichtkonversionsmittel erzeugten Spots (61s bis 66s) bestimmt werden.

7. Verfahren nach Anspruch 6, **dadurch gekennzeichnet, dass** Spots (61s bis 66s) ellipsenartiger Gestalt mit vertikaler großer Achse erzeugt werden.

8. Scheinwerfer für Kraftfahrzeuge mit zumindest einer modulierbaren Laserlichtquelle (11 bis 16), deren Laserstrahl über ein von einer Strahlablenksteuerung (9) angesteuertes Strahlablenkmittel (51, 52) auf ein Lichtkonversionsmittel (60) gelenkt wird, welche eine Phosphor zur Lichtkonversion aufweist, und mit einem Projektionssystem (70) zur Projektion des an dem Lichtkonversionsmittel erzeugten Leuchtbildes auf die Fahrbahn,
wobei eine erste Gruppe (1) von zumindest zwei Laserlichtquellen (11, 12, 13) zur Erzeugung einer ersten Gruppe von zumindest zwei übereinanderliegenden, im Wesentlichen horizontalen Lichtbändern (61, 62, 63) an dem Lichtkonversionsmittel (60) vorgesehen ist,
**dadurch gekennzeichnet, dass**
eine zweiten Gruppe (2) von zumindest zwei Laserlichtquellen (14, 15, 16) zur Erzeugung einer zweiten Gruppe von zumindest zwei übereinanderliegenden, im Wesentlichen horizontalen Lichtbändern (64, 65, 66) an dem Lichtkonversionsmittel (60) vorgesehen ist, wobei
den Laserlichtquellen (11 bis 16) eine Laseransteuerung (3) zugeordnet ist und die Laserstrahlen (11s bis 16s) über das Strahlablenkmittel (51, 52) so auf das Lichtkonversionsmittel (60) gelenkt sind, dass Lichtbänder (61, 62, 63) der ersten Gruppe (1) und Lichtbänder (64, 65, 66) der zweiten Gruppe einander auf dem Lichtkonversionsmittel (60) überlappen.

9. Scheinwerfer nach Anspruch 8, **dadurch gekennzeichnet, dass** die Überlappung der Lichtbänder zwischen 10 und 90 % der Höhe der Lichtbänder, vorzugsweise 50%, beträgt.

10. Scheinwerfer nach Anspruch 8 oder 9, **dadurch gekennzeichnet, dass** der Abstand der Lichtbänder voneinander und dadurch das Ausmaß der Überlappung durch den Einfallswinkel der Laserstrahlen auf das Strahlablenkmittel (51, 52) festgelegt ist.

11. Scheinwerfer nach einem der Ansprüche 8 bis 10, **dadurch gekennzeichnet, dass** die von den Laserlichtquellen (11, 12, 13) der ersten Gruppe (1) erzeugten Lichtbänder (61, 62, 63) ebenso wie die von den Laserlichtquellen (14, 15, 16) der zweiten Gruppe (2) erzeugten Lichtbänder (64, 65, 66) unmittelbar, ohne Abstand aneinander anschließen.

12. Scheinwerfer nach einem der Ansprüche8bis 11, **dadurch gekennzeichnet, dass** das Strahlablenkmittel zumindest einen, um eine Achse verschwenkbaren Mikrospiegel (51, 52) aufweist.

13. Scheinwerfer nach Anspruch 12, **dadurch gekennzeichnet, dass** der Mikrospiegel (51, 52) über die Strahlablenksteuerung (9) mit seiner mechanischen Eigenfrequenz angesteuert wird.

14. Scheinwerfer nach einem der Ansprüche 8 bis 13, **dadurch gekennzeichnet, dass** jeder Gruppe (1, 2) von Laserlichtquellen (11, 12, 13 bzw. 14,15,16) ein Mikrospiegel (51 bzw. 52) zugeordnet ist.

15. Scheinwerfer nach Anspruch 14, **dadurch gekennzeichnet, dass** die Verschwenkamplitude der Mikrospiegel (51, 52) über die Strahlablenksteuerung (9)änderbar ist.

16. Scheinwerfer nach einem der Ansprüche 8 bis 15, **dadurch gekennzeichnet, dass** jeder Laserlichtquelle (11 bis 16) eine Kollimatoroptik (21 bis 26) nachgeordnet ist.

17. Scheinwerfer nach einem der Ansprüche 8 bis 16, **dadurch gekennzeichnet, dass** zwischen jeder Gruppe (1, 2) von Laserlichtquellen (11, 12, 13 bzw. 14, 15,16) und dem Strahlablenkmittel (51, 52) eine Sammellinse (31 bzw. 32) mit einer nachfolgenden Zerstreuungslinse (41 bzw. 42) angeordnet ist.

18. Scheinwerfer nach einem der Ansprüche 8 bis 17, **dadurch gekennzeichnet, dass** die Laserlichtquellen (11 bis 16) Laserdioden sind.

## Claims

1. Method for generating a predetermined light distribution on a roadway by means of a motor vehicle headlamp, wherein at least one modulated laser beam is directed via at least one beam deflection means (51, 52) onto a light converter (60), and the luminous image produced on the light converter is directed onto the roadway,
wherein the laser beams of a first group (1) of at least two laser light sources (11, 12, 13) are directed via the beam deflection means (51, 52) onto the light converter (60) to generate a first group of at least two substantially horizontal light bands (61, 62, 63) positioned one above the other,
**characterised in that**
the laser beams of a further, second group (2) of at least two laser light sources (14, 15, 16) are directed via the beam deflection means (51, 52) onto the light converter (60) to generate a second group of at least two substantially horizontal light bands (64, 65, 66) positioned one above the other,
wherein light bands (61, 62, 63) of the first group (1) and light bands (64, 65, 66) of the second group overlap one another on the light converter (60).

2. Method according to claim 1, **characterised in that** the overlap is between 10 and 90% of the height of the light bands, preferably 50%.

3. Method according to claim 1 or 2, **characterised in that** the distance of the light bands from each other, and thereby the extent of overlap, is determined by the angle of incidence of the laser beams on the beam deflection means (51, 52).

4. Method according to any one of claims 1 to 3, **characterised in that** the beam deflection means comprises at least one micro-mirror (51, 52) pivotable about an axis (a).

5. Method according to claim 4, **characterised in that** the length of the light bands (61, 62, 63; 64, 65, 66) is adjusted through the oscillation amplitude of the micro-mirror (51, 52).

6. Method according to any one of the claims 1 to 5, **characterised in that**, by means of beam shaping optics (21-26, 31, 32, 41, 42) and/or through the choice of the distance of the light converter (60) from the focal points of the beam shaping optics (21-26, 31, 32, 41, 42), shape and size of the spots (61s - 66s) generated on the light conversion medium are determined.

7. Method according to claim 6, **characterised in that** spots (61s to 66s) elliptical shape with a large vertical axis are generated.

8. Headlamp for motor vehicles comprising at least one modulatable laser light source (11-16), the laser beam of which is directed via a beam deflection means (51, 52) controlled by a beam deflection control (9) onto a light converter (60) which comprises a phosphor for light conversion, and comprising a projection system (70) configured to project the luminous image generated on the light converter onto the roadway,
wherein a first group (1) of at least two laser light sources (11, 12, 13) are provided for generating a first group of at least two substantially horizontal light bands (61, 62, 63) positioned one above the other at the light converter (60),
**characterised in that**
a second group (2) of at least two laser light sources (14, 15, 16) is provided for generating a second group of at least two substantially horizontal light bands (64, 65, 66) positioned one above the other at the light converter (60),
wherein to the laser light sources (11-16) a laser control (3) is assigned, and the laser beams (11s-16s) are directed via the beam deflection means (51, 52) onto the light converter (60) such that light bands (61, 62, 63) of the first group (1) and light bands (64, 65, 66) of the second group overlap one another on the light converter (60).

9. Headlamp according to claim 8, **characterised in that** the overlap of the light bands is between 10 and 90% of the height of the light bands, preferably 50%.

10. Headlamp according to claim 8 or 9, **characterised in that** the distance of the light bands from each other, and thereby the extent of overlap, is determined by the angle of incidence of the laser beams on the beam deflection means (51, 52).

11. Headlamp according to any one of claims 8 to 10, **characterised in that** the light bands (61, 62, 63) generated by the laser light sources (11, 12, 13) of the first group (1) as well as the light bands (64, 65, 66) generated by the laser light sources (14, 15, 16) of the second group (2) are directly adjacent to each other without any distance.

12. Headlamp according to any one of claims 8 to 11, **characterised in that** the beam deflection means comprises at least one micro-mirror (51, 52) pivotable about an axis.

13. Headlamp according to claim 12, **characterised in that** the micro-mirror (51, 52) is controlled through the beam deflection control (9) at its mechanical proper frequency.

14. Headlamp according to any one of claims 8 to 13, **characterised in that** to each group (1, 2) of laser light sources (11, 12, 13 / 14, 15, 16) a micro-mirror (51 / 52) is assigned.

15. Headlamp according to claim 14, **characterised in that** the deflecting amplitude of the micro-mirrors (51, 52) is modifiable via the beam deflection control (9).

16. Headlamp according to any one of claims 8 to 15, **characterised in that** downstream of each laser light source (11 to 16), a collimator optic (21-26) is provided.

17. Headlamp according to any one of the claims 8 to 16, **characterised in that** between each group (1, 2) of laser light sources (11, 12, 13 / 14, 15, 16) and the beam deflector (51, 52) there is positioned a convergent lens (31 / 32) with a subsequent diverging lens (41 / 42).

18. Headlamp according to any one of claims 8 to 17, **characterised in that** the laser light sources (11 - 16) are laser diodes.

## Revendications

1. Procédé pour générer une distribution de lumière prédéterminée sur une chaussée à l'aide d'un projecteur de véhicule automobile, dans lequel au moins un faisceau laser modulé est dirigé sur un moyen de conversion de la lumière (60) par l'intermédiaire d'au moins un moyen de déviation de faisceau (51, 52) et l'image lumineuse produite par le moyen de conversion de la lumière est projetée sur la route,
dans lequel les faisceaux laser d'un premier groupe (1) d'au moins deux sources de lumière laser (11, 12, 13) sont dirigés par l'intermédiaire des moyens de déviation de faisceau (51, 52) sur le moyen de conversion de la lumière (60) pour générer un premier groupe d'au moins deux bandes lumineuses (61, 62, 63) sensiblement horizontales et situées l'une au-dessus de l'autre,
**caractérisé en ce que**
les faisceaux laser d'un deuxième groupe (2) d'au moins deux sources de lumière laser (14, 15, 16) sont dirigés par l'intermédiaire des moyens de déviation de faisceau (51, 52) sur les moyens de conversion de lumière (60) pour générer un deuxième groupe d'au moins deux bandes lumineuses (64, 65, 66) sensiblement horizontales et situées l'une au-dessus de l'autre,
des bandes lumineuses (61, 62, 63) du premier groupe (1) et des bandes lumineuses (64, 65, 66) du deuxième groupe se chevauchant sur les moyens de conversion de la lumière (60).

2. Procédé selon la revendication 1, **caractérisé en ce que** le chevauchement est compris entre 10 et 90% de la hauteur des bandes lumineuses, de préférence 50%.

3. Procédé selon la revendication 1 ou 2, **caractérisé en ce que** la distance des bandes lumineuses les unes par rapport aux autres, et donc l'étendue du chevauchement, est déterminée par l'angle d'incidence des faisceaux laser sur les moyens de déviation de faisceau (51, 52).

4. Procédé selon l'une quelconque des revendications 1 à 3, **caractérisé en ce que** le moyen de déviation de faisceau comprend au moins un micro-miroir (51, 52) pivotant autour d'un axe (a).

5. Procédé selon l'une quelconque des revendications 4, **caractérisé en ce que** la longueur des bandes lumineuses (61, 62, 63 ; 64, 65, 66) est réglée par l'amplitude d'oscillation du micro-miroir (51, 52).

6. Procédé selon l'une quelconque des revendications 1 à 5, **caractérisé en ce qu'** au travers des optiques de mise en forme de faisceau (21 à 26, 31, 32, 41, 42) et/ou la sélection de la distance des moyens de conversion de la lumière (60) par rapport aux points focaux de ces optiques, la forme et la taille des spots (61s à 66s) produits sur le moyen de conversion de la lumière sont déterminées.

7. Procédé selon la revendication 6, **caractérisé en ce que** des spots (61s à 66s) de forme d'ellipse avec un grand axe vertical sont formés.

8. Projecteur pour véhicules automobiles, comportant au moins une source de lumière laser modulable (11 à 16), dont le faisceau laser est dirigé par l'intermédiaire d'un moyen de déviation de faisceau (51, 52) commandé par une commande de déviation de faisceau (9) sur un moyen de conversion de la lumière (60) qui contient un phosphore pour la conversion de la lumière, et comportant un système de projection (70) permettant de projeter sur la chaussée l'image lumineuse produite sur le moyen de conversion de la lumière,
dans lequel un premier groupe (1) d'au moins deux sources de lumière laser (11, 12, 13) est prévu pour générer un premier groupe d'au moins deux bandes lumineuses (61, 62, 63) sensiblement horizontales et situées l'une au-dessus de l'autre sur le moyen de conversion de la lumière (60),
**caractérisé en ce que**
un deuxième groupe (2) d'au moins deux sources de lumière laser (14, 15, 16) est prévu pour générer un deuxième groupe d'au moins deux bandes lumineuses superposées (64, 65, 66) sensiblement horizontales et situées l'une au-dessus de l'autre sur le moyen de conversion de la lumière (60),
dans laquelle un contrôle laser (3) est attribué aux sources de lumière laser (11 à 16) et les faisceaux laser (11s à 16s) sont dirigés par l'intermédiaire des moyens de déviation de faisceau (51, 52) sur le des moyens de conversion de la lumière (60) de telle manière que des bandes lumineuses (61, 62, 63) du première groupe (1) et des bandes lumineuses (64, 65, 66) du deuxième groupe se chevauchent sur le moyen de conversion de la lumière (60).

9. Projecteur selon la revendication 8, **caractérisé en ce que** le chevauchement des bandes lumineuses est compris entre 10 et 90 % de la hauteur des bandes lumineuses, de préférence 50%.

10. Projecteur selon la revendication 8 ou 9, **caractérisé en ce que** la distance des bandes lumineuses les unes par rapport aux autres et donc l'étendue du chevauchement est déterminée par l'angle d'incidence des faisceaux laser sur les moyens de déviation de faisceau (51, 52).

11. Projecteur selon l'une quelconque des revendications 8 à 10, **caractérisé en ce que** les bandes lumineuses (61, 62, 63) générées par les sources de lumière laser (11, 12, 13) du premier groupe (1) ainsi que les bandes lumineuses (64, 65, 66) générées par les sources de lumière laser (14, 15, 16) du deuxième groupe (2) sont directement reliées entre elles sans aucune distance.

12. Projecteur selon l'une quelconque des revendications 8 à 11, **caractérisé en ce que** le moyen de déviation de faisceau comprend au moins un micro-miroir (51, 52) pivotant autour d'un axe.

13. Projecteur selon la revendication 12, **caractérisé en ce que** le micro-miroir (51, 52) est commandé par la commande de déviation de faisceau (9) avec sa fréquence propre mécanique.

14. Projecteur selon l'une quelconque des revendications 8 à 13, **caractérisé en ce que**, à chaque groupe (1, 2) de sources de lumière laser (11, 12, 13 ou 14, 15, 16), un micro-miroir (51 / 52) est associé.

15. Projecteur selon la revendication 14, **caractérisé en ce que** l'amplitude du pivotement des micro-miroirs (51, 52) est modifiable par le commande de déviation de faisceau (9).

16. Projecteur selon l'une quelconque des revendications 8 à 15, **caractérisé en ce que**, en aval de chaque source de lumière laser (11 à 16), une optique collimatrice (21 à 26) est disposée.

17. Projecteur selon l'une quelconque des revendications 8 à 16, **caractérisé en ce que**, entre chaque groupe (1, 2) de sources de lumière laser (11, 12, 13 / 14, 15, 16) et le moyen de déviation de faisceau (51, 52), est disposée une lentille convergente (31 / 32) avec une lentille divergente (41 / 42) subséquente.

18. Projecteur selon l'une quelconque des revendications 8 à 17, **caractérisé en ce que** les sources de lumière laser (11 à 16) sont des diodes laser.
